# EUROPEAN PATENT APPLICATION

(11) **EP 4 491 585 A1**
(43) Date of publication of application: **15.01.2025**
(21) Application number: 24382724.3
(22) Date of filing: 05.07.2024
(51) Int. Cl.: C02F 3/14, C02F 3/12, C02F 1/44, C02F 3/28, C02F 1/00, C02F 101/34, C02F 103/32

(54) **PROCESS FOR THE TREATMENT OF OLIVE VEGETABLE WATER AND USES OF THE PRODUCTS OBTAINED**

(30) Priority: 14.07.2023 ES 202330598
(71) Applicant: Orte Maturana, Mariano, 41013 Sevilla (ES)
(72) Inventor: Orte Maturana, Mariano, 41013 Sevilla (ES)
(74) Representative: Herrero & Asociados, S.L.

(57) **Abstract**

The present invention relates to a method for treating olive vegetable water that reduces the initial COD, allowing the obtained products to be used as fertilizers.
The method comprises the steps of: b) adding nutrients selected from nitrogen compounds and/or phosphorus compounds and/or potassium compounds to the olive vegetable water; d) digesting the product from step b to obtain digested olive vegetable water; e) decanting the product obtained in the digestion to obtain a liquid stream and a solid stream of digestion sludge.

## Description

The present invention relates to a process for the treatment of olive vegetable water and the uses of the products obtained through this process.

### Background of the Invention

In the process of producing virgin olive oil, the goal is to recover as much of the oil content in the olives as possible, separating it from the other accompanying components. This separation is achieved using one of these three systems: traditional pressing system, 3-phase mass centrifugation system, or 2-phase mass centrifugation system.

Olive vegetable water (*alpechin* in spanish) is generated in the traditional pressing system and in the three-phase mass centrifugation system. Olive vegetable water is an aqueous compound from the soft tissues of the olive. For every kilogram of crushed olives, 0.5 to 1.5 liters of olive vegetable water is generated. It is a dark-colored liquid composed of water, which makes up between 83% and 94% of its weight, a high percentage of organic matter ranging from 4% to 16%, and the rest are salts, constituting between 0.4% and 2.5%. Its contaminating organic load, measured in COD (Chemical Oxygen Demand), ranges from 45,000 to 130,000 mg O2/liter, a contaminating load that exceeds by 5 to 10 times the maximum load of wastewater from the most contaminating agri-food industries. Laws and regulations on wastewater discharge in Mediterranean countries prohibit the discharge of olive vegetable water into rivers, seas, lakes, land, and underground, primarily due to its high organic content.

In two-phase mass centrifugation systems, olive oil and olive pomace are generated. This olive pomace, containing around 70% water, is usually stored in reservoirs and dried throughout the year in an oven. To save energy in this drying oven, the olive pomace is processed beforehand in a physical extraction system, such as a three-phase centrifuge, which reduces the water content in the olive pomace by approximately 10% to 15%. This represents significant energy savings for the oven, but leads to the production of olive vegetable water. Developing a treatment procedure for olive vegetable water would allow the installation of physical extraction systems, such as three-phase centrifuges, before entering the dryer, resulting in substantial energy savings for the oven.

Currently, to mitigate the polluting effects of olive vegetable water, it is stored in reservoirs where, in most cases, it evaporates with forced spraying.

Other olive vegetable water treatment processes are based on "evaporation-concentration" technology. These processes involve high investment for implementation, high energy consumption, and the concentrated liquid obtained has a high organic matter load, measured in COD of the concentrated liquid (1,075,090 mg O2/liter), which does not comply with the maximum limit of 25,000 mg O2/liter established by some regulations for using this liquid effluent as fertilizer in agriculture. Additionally, the concentrated liquid has a high total polyphenol content, giving it a phytotoxic character that is aggressive to vegetation and incompatible with its use as compost fertilizer.

In the prior art, it is noted that the difficulty in carrying out biological treatment processes of olive vegetable water is due to the presence of polyphenols in the liquid, which have a strong toxic effect on bacteria that perform digestion.

Therefore, there is a need to develop olive vegetable water treatment processes that can valorize this product and overcome current treatment challenges.

### Description of the Invention

The present invention develops a procedure for the transformation and valorization of olive vegetable water, resulting in a product with a composition that shows lower COD and phenol concentrations compared to initial values.

In this invention, olive vegetable water is understood as an aqueous residue from the olive transformation processes into oil. It contains water from the olives themselves and from their washing and processing.

With the present invention, the problem of digesting olive vegetable water is solved, which, due to its contaminating power and high content of phenolic compounds with strong antibacterial properties, act as inhibitors of biological activities in digestion processes.

In this context, digestion refers to a process where the organic matter present in olive vegetable water is decomposed, in the presence or absence of oxygen, by microorganisms present in the wastewater, into simpler, smaller organic compounds. The present invention achieves a highly effective reduction of polyphenols in the biological process, reducing their initial values by at least 95%. This effectively neutralizes the phytotoxic nature of olive vegetable water and ensures that the revalorized final products are suitable for agricultural applications from this perspective.

In this invention, there is no initial step to remove phenols. Instead, with the addition of nutrients, the phenols, known as inhibitors of microorganisms, degrade during the digestion process.

In the present invention, a procedure has been developed that, through the addition of nutrients to olive vegetable water, achieves effective digestion in shorter timeframes than usual, without the need for a prior phenol removal stage. The organic load of olive vegetable water in terms of COD (Chemical Oxygen Demand) is reduced by 90% in the first few days of digestion; over a longer digestion period, this reduction becomes even more effective.

Therefore, a first aspect of the invention relates to a treatment procedure for olive vegetable water comprising the following steps: b) addition of nutrients selected from nitrogen compounds and/or phosphorus compounds and/or potassium compounds to the olive vegetable water; d) digestion of the product from step b) to obtain digested olive vegetable water; e) settling of the product obtained from digestion to obtain a liquid stream and a solid stream of digestion sludge.

### Description of a preferred embodiment

As previously mentioned, the first aspect of the invention includes a step of adding nutrients to olive vegetable water, a second digestion step, and a final settling step for the product obtained.

Preferably, the addition of nutrients includes nitrogen compounds, phosphorus compounds, and/or potassium compounds. More preferably, the nitrogen compound is selected from nitrogen, urea, ammonia, nitric acid, or their salts. More preferably, the phosphorus compound is selected from phosphorus, phosphates, phosphorus pentoxides, and their salts. Potassium is preferably added in the form of potassium oxide. Specifically, N-P-K fertilizer, containing nitrogen, phosphorus, and potassium compounds, or N-P fertilizer with only phosphorus and potassium, is preferred. The amount of nutrients added preferably ranges from 0.25% to 2% by weight relative to the weight of olive vegetable water.

In a preferred embodiment, before step b) of nutrient addition, there is a preliminary step a) of analyzing the olive vegetable water to be treated. More preferably, the percentages in mg/L of total organic carbon, total nitrogen, total phosphorus, and potassium are determined. Even more preferably, the analysis is conducted before and during step a).

"Total organic carbon" refers to carbon that is part of organic substances in surface waters. In the laboratory, the amount of total organic carbon in a water sample can be directly calculated by measuring the amount of carbon dioxide released after treatment with chemical oxidants.

"Total nitrogen" refers to the sum of nitrate, nitrite, organic nitrogen, and ammonia nitrogen values.

Total phosphorus is the sum of all existing forms of phosphorus: orthophosphate or phosphates, condensed phosphates, and organic phosphorus. Organic phosphorus is typically found as phosphates contained within or bonded to an organic compound.

Once the analysis is completed, the addition stage takes these values into account for the addition of compounds and in the quantities necessary to optimize digestion. In a preferred embodiment, digestion is aerobic digestion with aeration. More preferably, aeration of the product in step d) of aerobic digestion is preferably achieved by aerating the surface of the olive vegetable water obtained in step b). Even more preferably, air or oxygen is introduced during aeration, ideally within a range of 2 kg to 3 kg per kg of COD to be reduced.

To facilitate aerobic digestion, olive vegetable water is preferably added to a liquor from an aerobic treatment plant. More preferably, the addition is controlled, with a daily volume added until, after some days, proceed to add the total flow of the olive vegetable water to be treated. In one embodiment of the invention, aerobic digestion activity is measured during this addition process.

In a preferred embodiment, if during one of the stages of aerobic digestion an excess of any component in the olive vegetable water, such as polyphenols, is detected, it will hinder the biological reaction and the corresponding elimination of the COD. Optionally, the liquor being digested can be diluted with a percentage of water. The dilution percentage would be determined based on the corresponding analysis.

In a preferred embodiment, digestion is anaerobic digestion with a first stage of anaerobic digestion at a temperature between 50°C and 60°C. More preferably, this stage lasts between 5 and 10 days to produce biogas and a digested liquid stream from the olive vegetable water, which then undergoes a second stage of anaerobic digestion at a temperature between 30°C and 40°C for a period ranging from 15 days to 25 days to produce biogas and digested olive vegetable water. In another preferred embodiment, anaerobic digestion is first conducted at a temperature between 30°C and 40°C, followed by anaerobic digestion at a temperature between 50°C and 60°C. To facilitate anaerobic digestion, olive vegetable water is preferably added to liquor from an anaerobic treatment plant operating at temperatures of 30°C to 40°C or 50°C to 60°C, depending on the stage. More preferably, the addition is controlled, with a daily volume added until, after some days, proceed to add the total flow of the olive vegetable water to be treated. In one embodiment of the invention, aerobic digestion activity is measured during this addition process.

In a preferred embodiment, if during one of the stages of anaerobic digestion (mesophilic or thermophilic) an excess of any component in the olive vegetable water, such as polyphenols, is detected, it will hinder the biological reaction and the corresponding elimination of the COD. Optionally, the liquor being digested can be diluted with a percentage of water. The dilution percentage would be determined based on the corresponding analysis.

The biogas obtained from anaerobic digestion undergoes a purification stage to reduce its water vapor content and components derived from sulfur and nitrogen, thus preventing the possibility of generating corrosive acids during the condensation of fumes after combustion.

The advantage of anaerobic digestion lies in the potential use of the biogas obtained as fuel within the olive mill or pomace drying facility, directly in pomace drying ovens, heating or steam boilers, turbines, etc. Alternatively, the produced biogas can be exported for use as fuel elsewhere.

Both aerobic and anaerobic digestion transform the organic matter contained in olive vegetable water into humic and fulvic acids, making the products obtained suitable as fertilizers and compost.

Following the digestion stage, whether aerobic or anaerobic, the process preferably includes an ultrafiltration stage to separate the liquid stream from the sludge. Preferably, this sludge is combined with the sludge obtained in step e).

Preferably, the sludge undergoes a dehydration stage to obtain dried sludge. This dried sludge contains a high proportion of fulvic and humic acids, giving it compost characteristics. The dried sludge can be used as fertilizers and compost. Therefore, another aspect of this invention is the use of dried sludge as fertilizers and compost. In another embodiment of the invention, the liquid stream obtained in the ultrafiltration stage undergoes a filtration stage plus a osmosis stage to obtain a permeate liquid stream (water) and a second concentrated digested olive vegetable water stream. The concentrated digested olive vegetable water can be used as fertilizer due to its high nutrient content.

Preferably, one of the liquid streams from the osmosis stage is water and subsequently undergoes an aeration stage, preferably for three to four days, to reduce its residual COD to a minimum, making it suitable for irrigation water or discharge into public water bodies, complying with established regulations for these uses.

### EXAMPLES

The following examples are purely illustrative of this invention and should not be construed as limiting its scope.

### EXAMPLE 1. AEROBIC DIGESTION OF OLIVE VEGETABLE WATER WITH NUTRIENT ADDITION

Olive vegetable water with a COD of 44,000 mgO₂/liter and a phenol concentration of 2538 mg/liter was used.

Three samples were taken: urea at 46% was added to the first sample, and after three days, the COD dropped to 14,000 mgO₂/liter. A 0.5% N-P-K fertilizer (8-24-8) was added to the second sample, and after three days, the COD was 4000 mgO₂/liter. A 0.5% N-P-K fertilizer was added to the third sample, and after seven days, the COD of the olive vegetable water was 2200 mgO₂/liter, and the phenol concentration was 68 mg/liter. The addition of N-P (Nitrogen-Phosphorus) at a dosage of 0.25% by weight showed similar results.

In a few days, accelerated bacterial growth was observed, and the results were very conclusive. It was clearly demonstrated that nutrient addition in any of the tested forms significantly accelerated the aerobic biological process. The activation time for the biological process was very short, with COD reductions exceeding 90% in just three days. It is evident that the addition of Nitrogen (N) and Phosphorus (P) are the most needed nutrients for bacterial growth, as Potassium (K) is naturally present in significant amounts in the olive vegetable water. The reduction of polyphenols in the biological process was very effective, with at least a 97.3% reduction from the initial values, thus eliminating the phytotoxic nature of the olive vegetable water and ensuring that the revalued final products are suitable for agricultural application.

In comparison, an aerobic digestion without nutrient addition resulted in a COD reduction to only 22000 mgO₂/liter after three days, with no significant further reduction.

### Example 2. Anaerobic digestion of olive vegetable water

For the olive vegetable water treated with the same nutrients and the same quantity as in Example 1 but with anaerobic digestion, the following results and yields were obtained:
- COD of olive vegetable water entering the reactor: 44 Kg/m³
- Total polyphenols in the olive vegetable water entering the reactor: 2,538 mg/liter
- COD of olive vegetable water exiting the reactor: 3.8 Kg/m³
- Total polyphenols in the olive vegetable water exiting the reactor: 36 mg/liter
- COD reduction in the anaerobic process: 40.2 Kg/m³
- m³/Kg of COD: 0.435
- Biogas production per m3: 17.48 m³ of biogas/m³ of olive vegetable water
- Calorific value of biogas: 6,000 Kcal/m³ of gas
- Kilocalories per m³: 104,880 Kilocalories/m3 of olive vegetable water
- kWh per m³: 121.89 kWh/m³ of olive vegetable water

## Claims

1. A process for treating olive vegetable water comprising the steps of: b) adding nutrients selected from nitrogen compounds and/or phosphorus compounds and/or potassium compounds to the olive vegetable water; d) digesting the product from step b to obtain digested olive vegetable water; e) decanting the product obtained in the digestion to obtain a liquid stream and a solid stream of digestion sludge.

2. A process according to claim 1, **characterized by** comprising a step a) of analyzing the olive vegetable water to be treated before the step b) of adding nutrients.

3. A process according to claim 2, **characterized by** determining the percentages in mg/L of: total organic carbon, total nitrogen, total phosphorus, and/or potassium in the step a) of analyzing the olive vegetable water to be treated.

4. A process according to any of claims 1 to 3, **characterized by** comprising, after step e), an ultrafiltration step of the product obtained in the digestion and decanting in step e) to obtain a liquid stream and sludge.

5. A process according to claim 4, **characterized by** subjecting the liquid stream after ultrafiltration to an osmosis filtration step to obtain a liquid stream after osmosis and a second stream of concentrated digested olive vegetable water.

6. A process according to claim 1 or 4, **characterized by** subjecting the sludge to a dehydration step to obtain dehydrated sludge.

7. A process according to claim 5, **characterized by** subjecting the liquid stream after osmosis to an aeration step.

8. A process according to any of claims 1 to 7, **characterized by** the digestion being aerobic with aeration.

9. A process according to claim 8, **characterized by** adding the olive vegetable water onto a liquor from an aerobic treatment plant in the aerobic digestion.

10. A process according to any of claims 1 to 9, **characterized by** the digestion being anaerobic.

11. A process according to claim 10, **characterized by** adding the olive vegetable water onto a liquor from an anaerobic treatment plant in the anaerobic digestion.

12. A process according to claim 10, **characterized by** the anaerobic digestion comprising a stage of anaerobic digestion at a temperature ranging between 50°C and 60°C to obtain biogas and a liquid stream of digested olive vegetable water, which is then subjected to a second stage of anaerobic digestion at a temperature ranging between 30°C and 40°C to obtain biogas and digested olive vegetable water.

13. Use of the liquid stream obtained by the method of claim 9 as irrigation water.

14. Use of the concentrated digested olive vegetable water obtained by the method of claim 7 as fertilizer.

15. Use of the dehydrated sludge obtained by the method of claim 8 as fertilizer and compost.
